# EUROPÄISCHE PATENTANMELDUNG

(11) **EP 0 565 940 A1**
(43) Veröffentlichungstag der Anmeldung: **20.10.1993**
(21) Anmeldenummer: 93105221.1
(22) Anmeldetag: 30.03.1993
(51) Int. Cl.: F02F 1/16, F16J 10/04, B22D 19/00, G01N 33/48, G01N 33/566

(54) **In den Zylinderblock einer Brennkraftmaschine einzugiessende Lamellenhülse**

(30) Priorität: 13.04.1992 DE 4212355; 04.08.1992 DE 4225717
(71) Anmelder: J.N. EBERLE FEDERNFABRIK GmbH, D-86830 Schwabmünchen (DE)
(72) Erfinder: van Vulpen, Ulrich H., W-8930 Schwabmünchen (DE); Mensching, Helmut, W-8902 Neusäss (DE)
(74) Vertreter: Buchner, Otto, Dr.rer.nat.

(57) **Zusammenfassung**

In einen Leichtmetallzylinderblock einer Brennkraftmaschine einzugießende Lamellenhülse (30, 30') mit durchgestellten Lamellen (16, 16'), die in schraubenförmig um die Achse der Hülse verlaufenden Bahnen (14, 14') angeordnet sind und an ihren seitlichen Rändern Einziehungen aufweisen, wobei beide axialen Enden der Hülse (30, 30') je einen lamellenfreien Randstreifen (32, 34) aufweisen.

## Beschreibung

Die Erfindung betrifft eine in einen Zylinderblock einzugießende Hülse nach dem Oberbegriff des Patentanspruchs 1.

Eine derartige Hülse ist aus der DE 39 41 381 A1 bekannt. Diese Hülse wird derart in einen Zylinderblock aus Leichtmetall eingegossen, daß beim nachfolgenden Ausdrehen der Zylinderlaufbahn die die Lamellen verbindende Grundfläche einschließlich der Stege abgenommen wird und nur mehr die voneinander getrennten Lamellenkanten in der Laufbahn liegen.

Es ist nicht möglich, die bekannte Hülse ohne Beschädigung einzelner, vorwiegend an den axialen Enden der Hülse sitzenden Lamellen herzustellen, zu transportieren, zu behandeln und nach dem Eingießen in den Zylinderblock abzudrehen. Durch solche Beschädigungen und/oder Verbiegungen von Lamellen können aber Fehler und sogar Absplitterungen von Lamellenteilen bei Fertigstellung und Behandlung der Hülsen und auch nach dem Eingießen der Hülsen in einen Zylinderblock stattfinden.

Der Erfindung liegt die Aufgabe zugrunde, eine in einen Zylinderblock einzugießende Hülse so zu verbessern, daß die Herstellung, der Transport und die Handhabung sowie Weiterverarbeitung der Hülse erleichtert und beschädigungssicherer gemacht und ein fester Sitz der Lamellen im fertigen Zylinderblock gewährleistet werden kann.

Diese Aufgabe wird erfindungsgemäß durch die kennzeichnenden Merkmale des Anspruchs 1 gelöst.

Durch die gewählte Anordnung und seitliche Hinterschneidung der Lamellen wird einerseits ein guter Sitz der von der Grundfläche abgedrehten Lamellen im Zylinderblock gewährleistet und insbesondere die Möglichkeit eröffnet, an den axialen Enden der Hülse je einen durchgehenden Randstreifen der Grundfläche stehenzulassen, der beliebig schmal sein kann und zusammen mit der Grundfläche und den Stegen zwischen den Lamellenbändern bei der Bearbeitung der Zylinderlaufbahn abgedreht wird, aber während der Herstellung der Hülse, also während des Stanzens, Ablängens, Rundbiegens, Befestigens der Blechstreifenenden aneinander, während des thermischen Beschichtens und des Einbringens und Halterns der Hülse in der Form für den Zylinderblockguß für ein bequemes und genaues Handhaben der Hülse bzw. des die Hülse bildenden Blechstreifens ohne Beschädigungs- oder Verbiegungsgefahr der Lamellen sorgt. Die Randstreifen können bereits zur Halterung des Blechstreifens beim Ablängen bzw. Schneiden, Stanzen, Durchstellen der Lamellen, Transportieren, Rundbiegen und Verbinden der Blechstreifenenden und ebenso beim thermischen Beschichten und Haltern der Hülse in der Spritzgußform für den Zylinderblock hervorragend als Handhaben dienen. Weder bei diesen Tätigkeiten noch beim anschließenden Ausdrehen der Zylinderlaufbahn tritt ein Beschädigen, Verbiegen, Zerschneiden oder Abdrehen von Lamellen oder Lamellenteilen auf.

Die Unteransprüche betreffen vorteilhafte Ausgestaltungen der Erfindung.

Zum noch bequemeren Handhaben und Transportieren der Hülse bzw. des Blechstreifens können gemäß Anspruch 2 von Lamellen freie Zwickel der Grundfläche nahe den axialen Enden der Hülse mit Durchbrüchen versehen werden, die ebenfalls keine Beeinträchtigung der Lamellen und damit des fertigen Zylinderblocks bewirken.

Die Randstreifen können nach Anspruch 3 auch dazu verwendet werden, Abstandshalter an einem Hülsenende zu bilden, die einerseits ein lagerichtiges Einbringen der Hülse in eine Flammspritzvorrichtung bzw. thermische Beschichtungsvorrichtung sowie in die Spritzgußform für den Zylinderblock erleichtern und andererseits zur genauen Festlegung der Hülse in der zum besseren Formen leicht konischen Zylindergußform dienen. Das Anformen von an sich bekannten Abstandshaltern für diesen Zweck ist dadurch wesentlich vereinfacht und nicht mit Beeinträchtigung der Lamellen verbunden.

Das Festlegen der Endkanten des Blechstreifens in Hülsenform erfolgt gemäß den Ansprüchen 4 bis 6 durch wenigstens teilweises Ablängen des Blechstreifens längs eines oder mehrerer Stege, wobei als Verbindungseinrichtungen vorzugsweise Vorsprünge an der einen Endkante dienen, die mit der anderen Endkante verschweißt, verklinkt oder in sonstiger Weise fest verbunden werden. Die Endkanten können dabei entweder ausschließlich längs eines Steges oder an den Enden eines Steges auch teilweise quer durch den angrenzenden Zwickel verlaufen. Sie können aber auch V-förmig oder zick-zack-förmig abwechselnd längs Stegabschnitten und längs ausgestanzter Lamellenränder verlaufen. In jedem Falle läßt sich durch diese Ausbildung eine einfache Verbindung der Endkanten erreichen.

Um die Lamellen zur besseren Verankerung im gegossenen Zylinderblock mit seitlichen Einziehungen zu versehen, werden gemäß Anspruch 7 vorzugsweise Lochstempel verwendet, die einen Teil der Lamelle und gegebenenfalls des angrenzenden Steges herausstanzen. Dadurch ergeben sich beim Eingießen in den Zylinderblock seitliche Hinterschneidungen, welche die Lamellen nach dem Ausdrehen der Zylinderlaufbahn und somit Entfernen der Grundfläche, der Stege und der Randstreifen hervorragend im Zylinderblock verankern.

Nach Anspruch 2 sind an den axialen Enden der Hülse von Lamellen freie Zwickel vorgesehen. Nun ist aber an den Totpunkten, d.h. den Umkehrpunkten des Kolbens im Zylinder von Brennkraftmaschinen, insbesondere am oberen Totpunkt, die Beanspruchung der Zylinderlauffläche besonders hoch. Es wäre daher erwünscht, auch in diesen Zwickeln Lamellen vorzusehen, was aber bei der erfindungsgemäßen Hülse nicht ohne weiteres möglich erscheint.

Diese Schwierigkeit wird durch die Merkmale des Anspruchs 8 derart behoben, daß im fertigen ausgedrehten Zylinder die Zylinderlauffläche auch am oberen Totpunkt durchgehend mit Lamellenkanten des einen höheren Schmelzpunkt besitzenden Lamellenmaterials verstärkt ist. Gemäß Anspruch 9 erfolgt diese Verstärkung an beiden Totpunkten.

Besonders zweckmäßig gestaltet sich die Erzeugung der verkürzten Lamellen durch Lochstempel gemäß Anspruch 10.

Durch die schraubenförmige Anordnung der erindungsgemäßen Lamellenbahnen ergeben sich in Axialrichtung der in einen Zylinder eingegossenen Hülse, die der Bewegungsrichtung des Kolbens im Zylinder entspricht, zwischen den Lamellenkanten benachbarter Lamellenbahnen bandförmige Bereiche, in denen die Zylinderlauffläche nicht von Lamellenkanten verstärkt wird.

Durch die kennzeichnenden Merkmale des Anspruchs 11 können diese nicht verstärkten Bereiche wesentlich kleiner gemacht werden.

Wird der noch ebene Blechstreifen, d.h. die für die Herstellung der erfindungsgemäßen Lamellenhülse verwendete Metallplatine, nach dem Erzeugen und Durchstellen der Lamellen in an sich bekannter Weise über einen sich drehenden zylindrischen Dorn zu einer zylindrischen Hülse geformt, so zeigt es sich, daß stets der voraneilende Seitenrand jeder duchgestellten Lamelle stärker nach innen zur Grundfläche hin geklappt wird als der nacheilende Seitenrand der gleichen Lamelle. Dies bedeutet, daß die Lamellen bei der fertigen Hülse eine innere Verwindung aufweisen, wobei der Durchstellwinkel am voreilenden Seitenrand etwas geringer ist als am nacheilenden Seitenrand. Darunter könnte die gleichmäßige Verankerung der Lamellen in dem Leichtmetall, in das die Hülse eingegossen wird, leiden.

Nach dem Verfahren gemäß Anspruch 12 wird daher bereits beim Durchstellen aus der Grundfläche den Lamellen eine Verwindung erteilt, welche der durch das Biegen zwangsläufig erzeugten Verwindung entgegenwirkt. Nach Anspruch 13 ist diese Gegenwirkung gerade so groß, daß die Lamellen nach dem Biegen der Grundfläche zur Hülse einen etwa gleichbleibenden Durchstellwinkel aufweisen. Dadurch wird eine ausgezeichente gleichbleibende Verankerung der Lamellen im Leichtmetall gewährleistet.

Anhand der Figuren werden Ausführungsbeispiele der Erfindung näher erläutert. Es zeigt:
- Fig. 1: eine schematische Aufsicht auf einen abgelängten Blechstreifen zur Bildung der erfindungsgemäßen Hülse sowie den Beginn eines nachfolgenden Blechstreifens,
- Fig. 2: einen Schnitt längs der Linie II-II in Fig. 3,
- Fig. 3: eine axiale Aufsicht auf die aus dem Blechstreifen gemäß Fig. 1 gebildete erfindungsgemäße Hülse,
- Fig. 4: einen vergrößerten Ausschnitt aus Fig. 1,
- Fig. 5: einen stark vergrößerten Ausschnitt aus Fig. 4,
- Fig. 6: eine der Fig. 1 entsprechende schematische Aufsicht auf eine zweite Ausführungsform,
- Fig. 7: einen der Fig. 2 entsprechenden schematischen Schnitt durch die Hülse gemäß der zweiten Ausführungsform,
- Fig. 8: einen vergrößerten Ausschnitt aus Fig. 6,
- Fig. 9: einen Teilschnitt durch eine Verbindungsstelle der beiden Endkanten des die Hülse bildenden Blechstreifens,
- Fig. 10: einen Ausschnitt aus einer schematischen Aufsicht auf einen Blechstreifen zur Bildung der erfindungsgemäßen Hülse,
- Fig. 11: einen der Fig. 10 entsprechenden Ausschnitt einer anderen Ausführungsform des Blechstreifens,
- Fig. 12: einen anderen Ausschnitt einer schematischen Aufsicht auf den Blechstreifend entsprechend Fig. 4,
- Fig. 13: einen der Fig. 12 entsprechenden Ausschnitt des Blechstreifens mit erfindungsgemäß gegeneinander versetzten Lamellen,
- Fig. 14: eine schematische Teildarstellung des Biegevorgangs des zur Herstellung der erfindungsgemäßen Hülse verwendeten Blechstreifens und
- Fig. 15: eine Teilschrägansicht eines Blechstreifens mit ausgestellten und in sich verwundenen Lamellen gemäß der vorliegenden Erfindung.

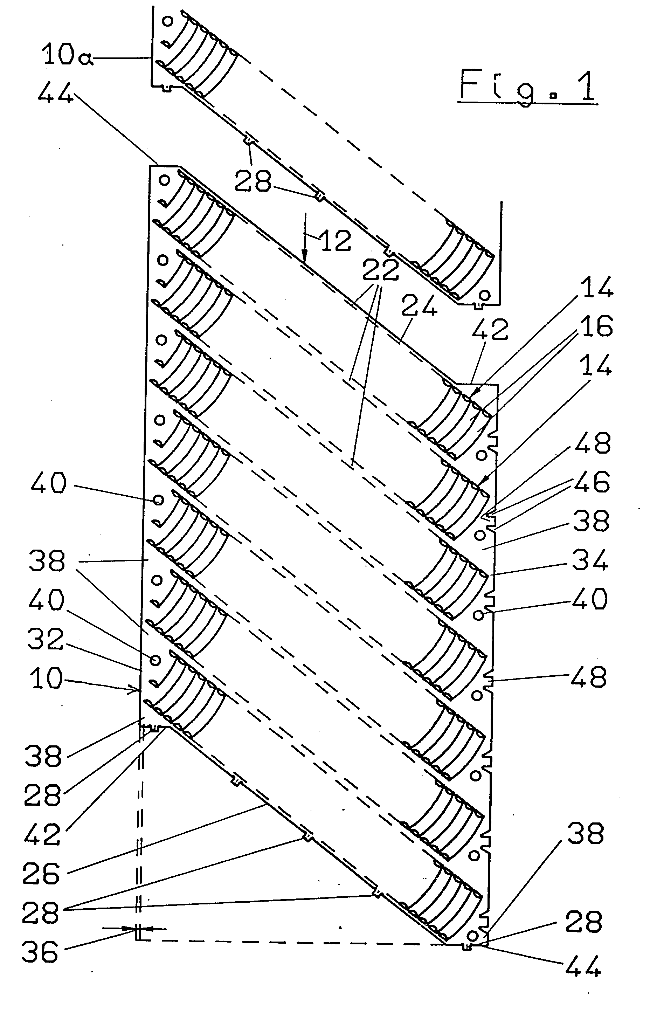

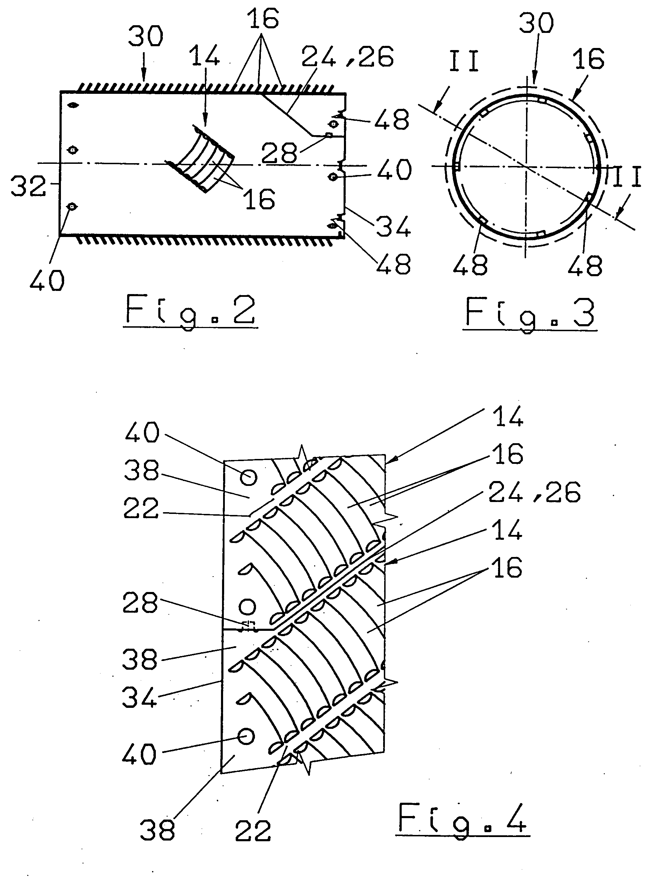

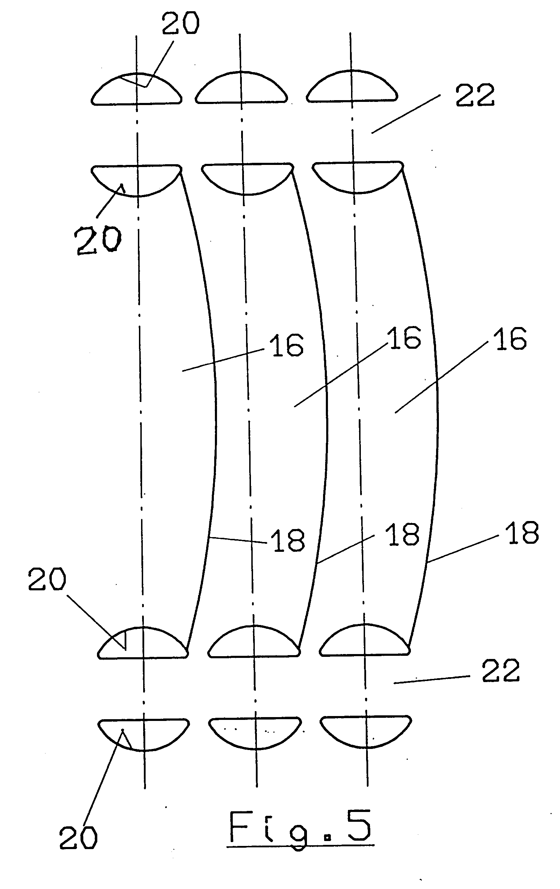

Bei der in den Figuren 1 bis 5 dargestellten Ausführungsform wird gemäß Fig. 1 ein fortlaufendes Blechband 10 mit schräg zu dessen Längserstreckung 12 verlaufenden parallelen Bahnen 14 von Lamellen 16 versehen, indem gemäß Fig. 5 leicht gekrümmte Linien 18 zur Bildung der später im Inneren des zu gießenden Zylinderblockmaterials liegenden freien Lamellenränder sowie jeweils an beiden Enden der gekrümmten Linien 18 durch kreissegmentförmige Lochstempel konkave Einziehungen 20 an den seitlichen Rändern der Lamellen 16 gebildet werden. Zwischen den einzelnen Lamellenbahnen 14 bleiben von der Grundfläche des Blechstreifens 10 durchlaufende Stege 22 unverändert stehen. Während eine Endkante 24 im wesentlichen längs der Mitte eines Steges 22 verläuft, werden beim Schneiden der gegenüberliegenden Endkante 26 längs einer Stegmittellinie lappenförmige Vorsprünge 28 stehen gelassen, die nach dem Rundbiegen des Blechstreifens 10 zu einer Hülse gemäß Figuren 2 und 3 zum gegenseitigen festen Verbinden, beispielsweise Verschweißen, der beiden Endkanten 24 und 26 dienen.

An beiden axialen Enden der allgemein mit 30 bezeichneten Hülse bzw. an den seitlichen Rändern des Blechstreifens 10 ist je ein um den ganzen Umfang der Hülse durchlaufender und von Lamellen 16 freier Randstreifen 32 bzw. 34 etwa mit der Breite 36 vorgesehen. Zwischen den Randstreifen 32 und 34 und den Stegen 22 sind jeweils etwa dreieckige, von Lamellen 16 freie Zwickel 38 der unveränderten Grundfläche des Blechstreifens 10 gebildet, die jeweils mit den Randstreifen 32, 34 und den Stegen 22 zusammenhängen und in der gleichen radialen Ebene der Hülse 30 liegen. In diese Zwickel 38 ist je ein kreisrundes Loch 40 zum bequemeren Handhaben und Transportieren des Blechstreifens 10 und der daraus gebildeten Hülse 30 vorgesehen.

Die Lamellen 16 werden in der aus Fig. 2 ersichtlichen Weise schräg durchgestellt, so daß sie von der Grundfläche der Hülse 30 nach außen ragen.

Es ist ersichtlich, daß die schräg zur Längserstreckung 12 des Blechstreifens 10 angeordneten Lamellenbahnen 14 auf der Hülse gemäß Fig. 2 schraubenförmig verlaufen. Ferner ist in Fig. 1 der Beginn eines zweiten, dem Blechstreifen 10 gleichen Blechstreifens 10 a dargestellt, um das Aneinanderanschließen der Endkanten 24 und 26 mit den überlappenden Vorsprüngen 28 zu demonstrieren. Schließlich ist aus Fig. 1 zu sehen, daß die Endkanten 24 und 26 an ihren jeweiligen Enden einen senkrecht zu den jeweiligen Randstreifen 32 bzw. 34 geführten und den angrenzenden Zwickel 38 quer durchsetzenden Kantenabschnitt 42 bzw. 44 aufweisen, die jeweils einen Vorsprung 28 tragen.

Der eine Randstreifen 34 ist im Bereich jedes Zwickels 38 mit einem Paar von etwa dreieckigen Einschnitten 46 versehen, die zwischen sich einen lappenförmigen Abstandshalter 48 einschließen, welcher in der aus Fig. 2 ersichtlichen Weise in bezug auf die fertige Hülse 30 nach innen gebogen wird.

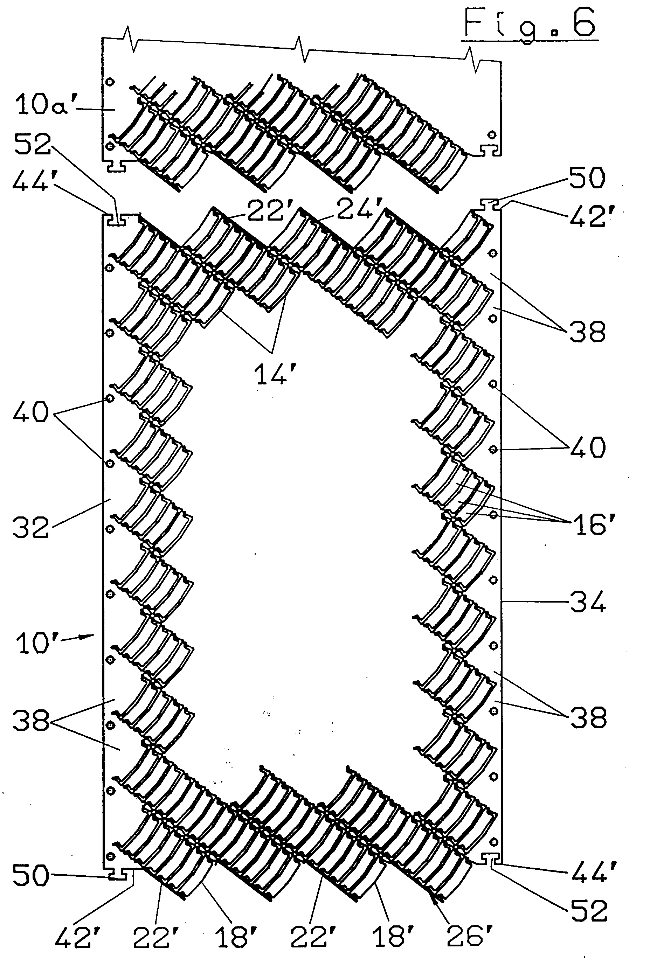

Bei der in den Figuren 6 bis 9 dargestellten Ausführungsform sind für gleiche Teile die gleichen Bezugszeichen und für entsprechende Teile die mit einem Strich versehenen gleichen Bezugszahlen verwendet.

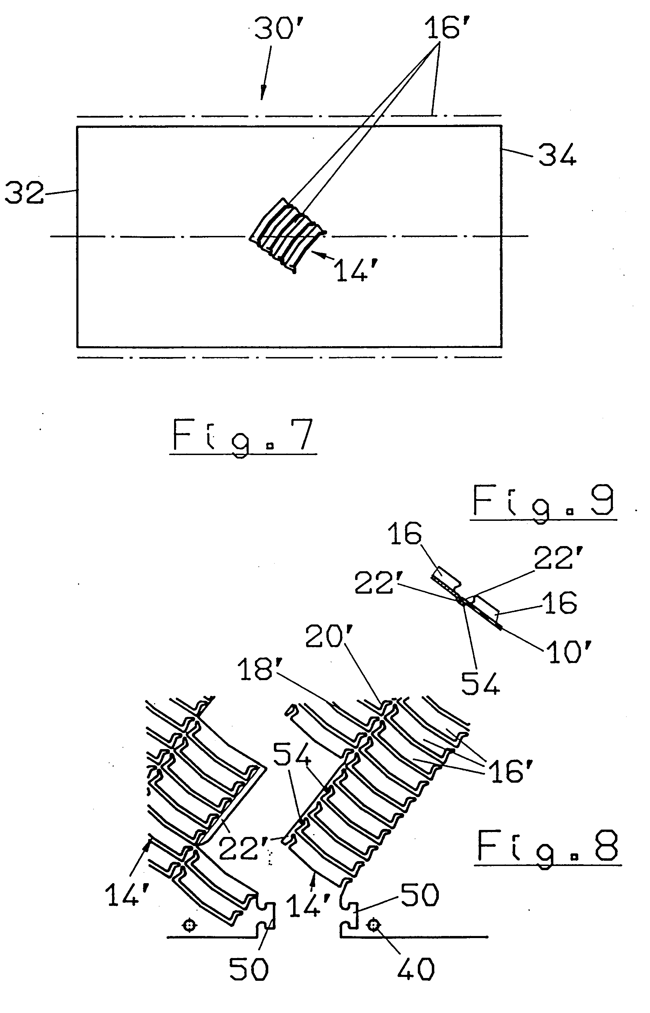

Die wesentlichen Unterschiede der zweiten Ausführungsform gegenüber der ersten sind in der Form der Lamellen 16' und ihrer seitlichen Einziehungen 20' sowie in den im wesentlichen zick-zack-förmigen Endkanten 24' und 26' zu sehen. Die freien Lamellenränder 18' werden bei dieser Ausführungsform nicht durch Stanzlinien, sondern durch Herausstanzen eines in der Mitte leicht abgewinkelten Streifens mit im übrigen geradlinigen Begrenzungen, der an beiden Enden zur Bildung der seitlichen Einziehungen 20' scharf abgewinkelt ist, erzeugt. Die Endkanten 24' und 26' verlaufen zick-zack-förmig abwechselnd längs eines Steges 22' und eines freien Lamellenrandes 18'. Die Verbindung der Endkanten 24', 26' nach der Bildung der in Fig. 7 gezeigten Hülse 30' erfolgt durch Verklinken von an den Endabschnitten 42' sitzenden hinterschnittenen Vorsprüngen 50 mit entsprechenden in den Endabschnitten 44' vorgesehenen Ausnehmungen 52 sowie gegebenenfalls durch in den Fig. 8 und 9 angedeuteten Verschweißungen oder ähnliche Befestigungsarten 54 zwischen aneinanderliegenden Stegteilen 22.

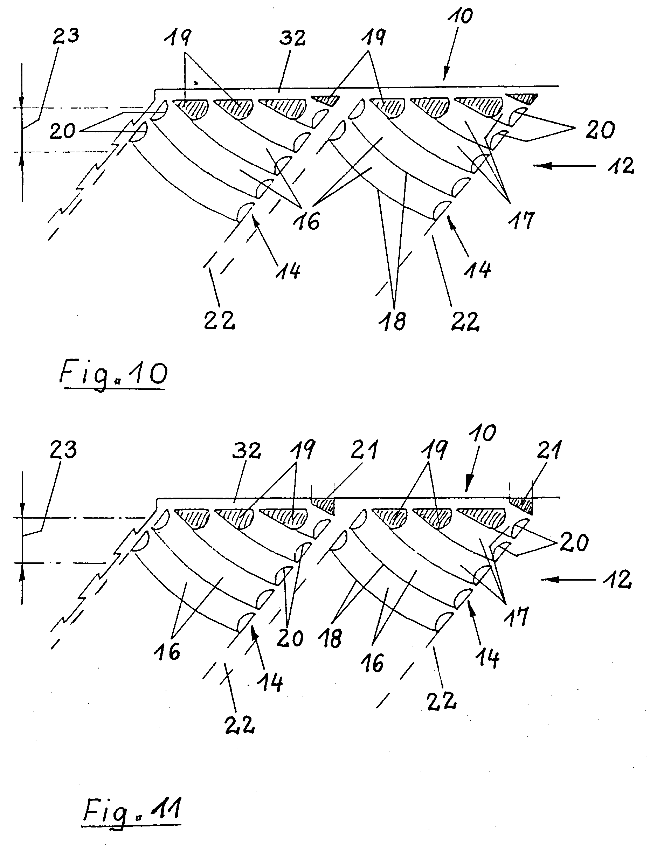

Wie oben erläutert, sind zwischen dem Randstreifen 32 und den Stegen 22 jeweils etwa dreieckige Zwickel der Grundfläche des Blechstreifens 10 gebildet, die jeweils mit den Randstreifen 32 und den Stegen 22 zusammenhängen und in der gleichen radialen Ebene der zu bildenden Hülse liegen. Gemäß Fig. 10 sind in diesen Zwickeln die jeweilige Lamellenbahn 14 fortsetzende, jedoch gegenüber den übrigen Lamellen 16 in ihrer Längserstreckung zu den Randstreifen 32 hin zunehmend verkürzte Lamellen 17 vorgesehen. An ihrem an dem benachbarten Steg 22 angrenzenden Längsrand tragen diese verkürzten Lamellen 17 die gleichen seitlichen Einziehungen 20 wie die nicht verkürzten Lamellen 16. Um gleichartige Einziehungen auch an den entgegengesetzten Längsrändern zu erzielen, werden vorzuzgsweise durch Lochstempel etwa kreissektorförmige bzw. dreieckige und in den Figuren 10 und 11 schraffiert wiedergegebene Ausnehmungen 19 in die Grundfläche des Blechstreifens 10 gestanzt.

Die Ausführungsform gemäß Fig. 11 unterscheidet sich von Fig. 10 dadurch, daß eingestanzte Ausnehmungen 21 den Randstreifen 32 durchsetzen und nach außen offen sind, wodurch sich der Stanzvorgang vereinfacht. Der durch den Randstreifen 32 gewährleistete Zusammenhang des ganzen Blechstreifens 10 ist trotzdem durch die stehenbleibenden Bereiche des Blechstreifens 10 gesichert. Die verkürzten Lamellen 17 erstrecken sich somit in Fortsetzung der nicht verkürzten Lamellen 16 bis zum Randstreifen 32, so daß die Lauffläche des herzustellenden Zylinders vor allem in dem besonders stark beanspruchten Bereich 23, der dem Umkehrbereich des Kolbens entspricht, durch Kanten von eingegossenen Lamellen gleichmäßig verstärkt ist.

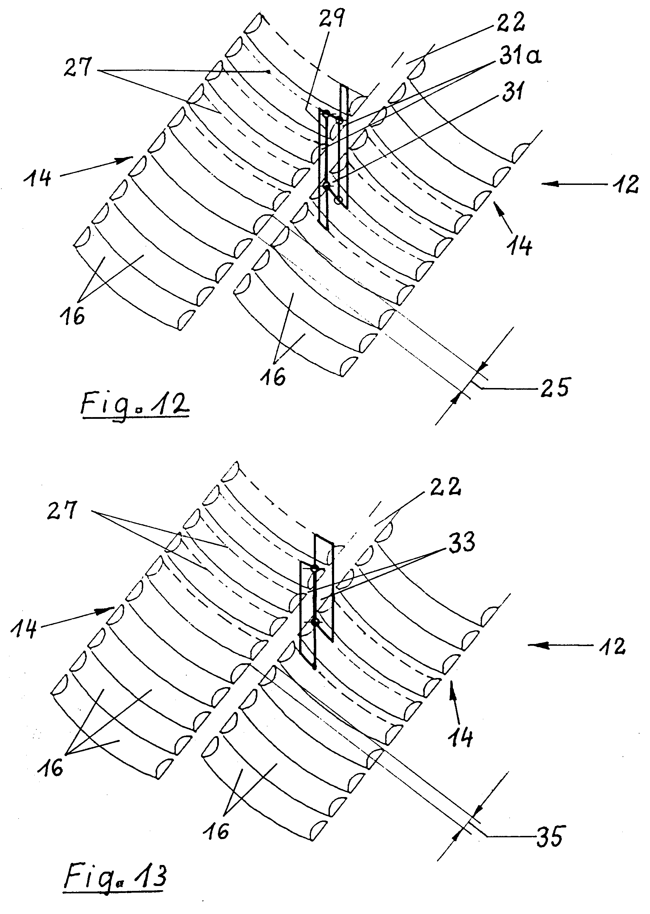

Beim Ausführungsbeispiel der Fig. 12 sind die Lamellen 16 in den parallelen Lamellenbahnen 14 gegenseitig ausgerichtet, so daß jeweils eine Lamelle 16 einer Lamellenbahn 14 mit einer Lamelle 16 der nächsten Lamellenbahn 14 innerhalb des gleichen Lamellenabstandes 25 liegt. Die nach dem Formen der fertigen Hülse, Eingießen derselben in den Zylinderblock und Ausdrehen der Zylinderlaufbahn in dieser Laufbahn liegende Kante 27 jeder Lamelle ist in den Figuren 12 und 13 durch gestrichelte Linien angedeutet. In der Bewegungsrichtung 29 des Kolbens, die der Axialrichtung der einzugießenden Hülse entspricht, sind zwischen mehreren derartigen Kantenlinien 27 jeweils ein kürzerer mittlerer bandförmiger oder etwa parallelogrammförmiger Bereich 31 und zwei längere seitliche Bereiche 31a gebildet, welche frei von solchen verstärkenden Kantenlinien 27 sind.

Diese seitlichen bandförmigen Bereiche 31a gemäß Fig. 12 haben eine wesentlich größere Ausdehnung in Kolbenlaufrichtung, d.h. senkrecht zur Längserstreckung 12, als die entsprechenden bandförmigen Bereiche 33 gemäß Fig. 13. Dies wird erreicht, wenn die Lamellen 16 einer Bahn 14 jeweils gegen die Lamellen 16 der benachbarten Bahn 14 um eine halbe Lamellentiefe 35 versetzt werden. Die Länge der Kolbenbewegung auf nicht verstärkter Zylinderlaufbahn kann durch diese Maßnahme wirksam verkürzt werden.

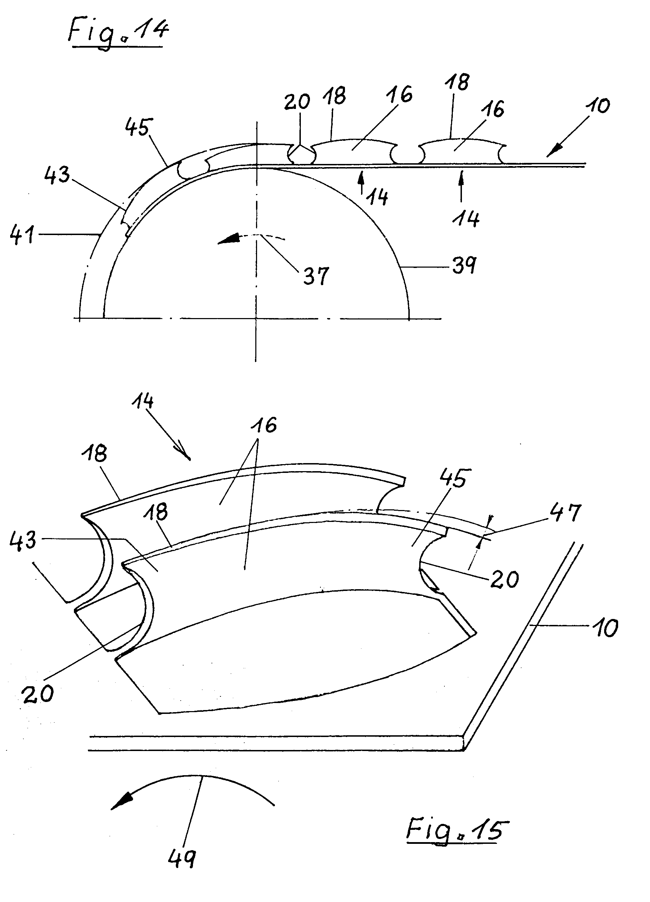

Wenn man einen Blechstreifen mit bereits durchgestellten Lamellen 16, die zu schrägen Lamellenbahnen 14 zusammengefaßt sind, über einen sich gemäß dem Pfeil 37 drehenden zylindrischen Dorn 39 in der in Fig. 14 gezeigten Weise biegt, so ergibt sich zwar insgesamt ein durch die strichpunktierte Linie 41 angedeuteter Außendurchmesser der zu bildenden Lamellenhülse, jedoch wird jeweils die voreilende Anbindung jeder Lamelle an den Blechstreifen 10 stärker nach innen gebogen als die nacheilende. Dadurch weist die Lamelle am voreilenden Rand 43 einen geringeren Außendurchmesser auf als am nacheilenden Rand 45. Somit ergibt sich keine gleichmäßige Verankerung beim Eingießen in den Zylinderblock.

Um dies zu vermeiden, wird den Lamellen 16 beim Durchstellen aus dem Blechstreifen 10 eine Verwindung erteilt, die an der Außenkante 18 einem Verwindungswinkel 47 entspricht (Fig. 15). Vor dem Biegevorgang, der durch den Pfeil 49 angedeutet ist, ist daher der Außendurchmesser des voreilenden Randes 43 größer als der Außendurchmesser des nacheilenden Randes 45. Dies entspricht einem etwas größeren Durchstellwinkel am voreilenden Rand 43 und einem etwas kleineren Durchstellwinkel der Lamelle 16 am nacheilenden Rand 45. Durch den nachfolgenden Biegegang wird sodann der Außendurchmesser der Lamellen 16 sowie gleichzeitig der Durchstellwinkel derselben über die ganze Länge der freien Lamellenkante 18 etwa gleichbleibend. Somit ergibt sich beim Eingießen in den Zylinderblock eine etwa gleichmäßige Tiefe der Einbettung der Lamellen 16 und somit eine gleichbleibend gute Verankerung derselben.

## Patentansprüche

1. In einen Leichtmetallzylinderblock einer Brennkraftmaschine einzugießende perforierte Hülse, die aus einem verschleißbeständigen, einen höheren Schmelzpunkt als das Leichtmetall aufweisenden dünnwandigen Blechstreifen mit aus einer Grundfläche schräg nach außen durchgestellten Lamellen hergestellt ist, wobei die Lamellen mit einer durch thermisches Spritzen aufgebrachten Schicht versehen und in schraubenförmig um die Achse der Hülse verlaufenden Bahnen angeordnet sind und wobei zwischen den Lamellenbahnen in der Grundfläche liegende Stege angeordnet sind, dadurch gekennzeichnet, daß die Lamellen (16, 16') mit ihrer Längserstreckung quer zur Längsrichtung der Bahnen (14, 14') angeordnet sind und an ihren seitlichen Rändern Einziehungen (20, 20') aufweisen und daß beide axialen Enden der Hülse (30, 30') je einen in der Grundfläche liegenden, mit den Stegen (22, 22') zusammenhängenden und von Lamellen (16, 16') freien Randstreifen (32, 34) aufweisen, welcher um den ganzen Hülsenumfang verläuft.

2. Hülse nach Anspruch 1 dadurch gekennzeichnet, daß die Randstreifen (32, 34) mit den Stegen (22, 22') von Lamellen (16, 16') freie Zwickel (38) der Grundfläche bilden, in denen Durchbrüche (40) vorgesehen sind.

3. Hülse nach Anspruch 1 oder 2, dadurch gekennzeichnet, daß einer der Randstreifen (32, 34) im Bereich der Zwickel (38) Einschnitte (46) aufweist und daß von den Einschnitten (46) gebildete Abstandshalter (48) aus der Grundfläche senkrecht nach innen gebogen sind.

4. Hülse nach einem der vorangehenden Ansprüche, dadurch gekennzeichnet, daß die Endkanten (24, 26; 24', 26') des die Hülse (30, 30') bildenden Blechstreifens (10, 10') wenigstens teilweise längs der Mitte eines oder mehrerer Stege (22, 22') geschnitten und durch Verbindungseinrichtungen (28; 50, 52, 54) miteinander verbunden sind.

5. Hülse nach Anspruch 4, dadurch gekennzeichnet, daß die Verbindungseinrichtungen aus Vorsprüngen (28) bestehen, die aus einer Endkante (26, 42, 44) des Blechstreifens (10) vorstehen und an der anderen Endkante (24, 42, 44) des Blechstreifens (10) befestigt sind.

6. Hülse nach Anspruch 4 oder 5, dadurch gekennzeichnet, daß die Endkanten (24', 26') des Blechstreifens (10') teilweise längs der freien Längsränder (18') der Lamellen (16') verlaufen.

7. Hülse nach einem der vorangehenden Ansprüche, dadurch gekennzeichnet, daß die seitlichen Einziehungen (20, 20') der Lamellen (16, 16') durch Lochstempel erzeugt sind.

8. Hülse nach Anspruch 1, dadurch gekennzeichnet, daß in den von den Randstreifen mit den Stegen (22) gebildeten Zwickeln der Grundfläche (10) wenigstens an einem axialen Ende der Hülse die Lamellenbahnen (14) fortsetzende, jedoch gegenüber den übrigen Lamellen (16) in ihrer Längserstreckung zu den Randstreifen (32) hin zunehmend verkürzte Lamellen (17) mit seitlichen Einziehungen (20) vorgesehen sind, welche die Zwickel gleichmäßig ausfüllen und die jeweils an einem seitlichen Rand (20) mit einem Randstreifen (32) und am anderen seitlichen Rand (20) mit einem Steg (22) zusammenhängen.

9. Hülse nach Anspruch 8, dadurch gekennzeichnet, daß verkürzte Lamellen (17) an beiden axialen Enden der Hülse vorgesehen sind.

10. Hülse nach Anspruch 8 oder 9, dadurch gekennzeichnet, daß die verkürzten Lamellen (17) durch Lochstempel zum Durchstellen freigeschnitten sind.

11. Hülse nach einem der Ansprüche 1 oder 8 - 10, dadurch gekennzeichnet, daß die Lamellen (16) nebeneinanderliegender Bahnen (14) um ihre halbe Breite (35) in Richtung der Bahnen (14) gegeneinander versetzt sind.

12. Verfahren zur Herstellung der Hülse nach einem der vorangehenden Ansprüche, wobei die Lamellen in der ebenen Grundfläche erzeugt und aus dieser durchgestellt werden und sodann die Grundfläche zur Bildung der Hülse über einen zylindrischen Dorn gewickelt wird, dadurch gekennzeichnet, daß den Lamellen beim Durchstellen aus der ebenen Grundfläche eine Verwindung derart erteilt wird, daß der Durchstellwinkel der Lamellen vor dem Aufwickeln der Grundfläche an ihrem in Aufwickelrichtung zur Grundfläche vorderen Seitenrand größer ist als am jeweils rückwärten Seitenrand.

13. Verfahren nach Anspruch 12, dadurch gekennzeichnet, daß der Verwindungsgrad der Lamellen so groß gewählt wird, daß nach dem Biegen der Grundfläche zur Hülse die Lamellen über ihre Längserstreckung einen etwa gleichbleibenden Durchstellwinkel aufweisen.
